Europäisches Patentamt

European Patent Office

Office européen des brevets

(11) Numéro de publication: **0 256 947**
**A1**

# DEMANDE DE BREVET EUROPEEN

(21) Numéro de dépôt: 87401864.1

(22) Date de dépôt: 10.08.87

(51) Int. Cl.⁴: **A 01 C 1/02**
**A 23 L 1/185**

(30) Priorité: 13.08.86 FR 8611707

(43) Date de publication de la demande:
24.02.88 Bulletin 88/08

(84) Etats contractants désignés:
BE CH DE ES GB IT LI LU NL

(71) Demandeur: **SOCIETE FRANCAISE D'ENTRETIEN ET MONTAGES INDUSTRIELS SOFREMI**
**Zone Industrielle**
**F-62970 Courcelles-les-Lens (FR)**

(72) Inventeur: **Omente, Pedro**
**13 Rue Basly**
**F-62141 Evin Malmaison (FR)**

(74) Mandataire: **Berogin, Francis et al**
**CABINET HARLE & PHELIP 21, rue de la Rochefoucauld**
**F-75009 Paris (FR)**

(54) **Procédé et dispositif industriels de germination.**

(57) La présente invention concerne un dispositif industriel de germination de céréales et/ou légumineuses comprenant une cuve cylindrique allongée (10) montée pour pouvoir tourner autour de son axe, des moyens (12, 13, 14) pour entraîner cette cuve en rotation, des moyens (31, 32) pour introduire et répartir les grains à traiter dans la cuve, des moyens (33) d'arrosage par un fluide approprié sur toute la longueur de la cuve des grains à traiter, des moyens (16, 17) pour souffler de l'air chaud dans la cuve.

FIG.1A

FIG.1B

FIG.1C

FIG.1A

EP 0 256 947 A1

Bundesdruckerei Berlin

## Description

Procédé et dispositif industriels de germination de céréales et/ou légumineuses.

La présente invention concerne le domaine de l'élaboration d'aliments pour animaux. Plus particulièrement, elle concerne un procédé et un dispositif industriels permettant une germination biologique de céréales et/ou légumineuses.

De façon classique, la germination naturelle des céréales, par exemple de l'orge dans une malterie, est obtanue en les empilant dans de grands bassins à l'air libre qui sont éventuellement arrosés. Ces procédés présentent l'inconvénient d'exiger une durée longue pour obtenir une germination.En outre, les produits obtenus ne sont généralement pas dans un état homogène.

Un objet de la présente invention est de prévoir un procédé et un dispositif permettant l'obtention de façon automatisée et à échelle industrielle de céréales et/ou légumineuses germées.

Un autre objet de la présente invention est de prévoir un tel procédé associé à un tel dispositif de structure relativement simple et de coût relativement bas pouvant être mis en oeuvre sur les lieux de production des céréales et/ou légumineuses et/ou de consommation des aliments pour animaux obtenus,c'est-à-dire les régions céréalières et/ou léguminaires et/ou d'élevage.

Pour atteindre ces objets,la présente invention propose un procédé industriel de germination de céréales et/ou légumineuses comprenant les étapes suivantes:

a)le chargement et la répartition des grains à faire germer dans une cuve cylindrique allongée,

b) le lavage des grains par arrosage avec un liquide ou immersion dans un liquide déversé dans la cuve, et l'évacuation du liquide de lavage,

c) au moins une phase de ventillation d'air chaud, postérieurement au lavage,

d) au moins une phase d'arrosage des grains par pulvérisation d'un liquide chaud dans la cuve, postérieurement au lavage, et l'évacuation du liquide en excès, et

e) au moins une phase d'entraînement en rotation de la cuve autour de son axe, postérieurement au lavage.

Dans une variante préférée de mise en oeuvre, ce procédé comprend, postérieurement au lavage, un cycle répétitif comportant une phase de ventilation, une phase d'arrosage et deux phases de rotation, dont l'une se déroule au moins partiellement entre la phase de ventilation et la phase d'arrosage, et l'autre entre l'une de ces deux phases du cycle considéré et l'autre de ces deux phases mais du cycle précédant ou suivant.

Les quatre phases de ce cycle peuvent se dérouler selon une séquence de phases successives, mais, dans une autre variante du procédé, il est également possible qu'au moins une phase de ventilation et au moins une phase de rotation et/ou au moins une phase d'arrosage et au moins une phase de rotation se recouvrent au moins partiellement dans le temps. Dans ce dernier cas, il sera avantageux que la fin d'une période de recouvrement de deux phases corresponde à la fin d'une phase de ventilation ou d'arrosage, avant la fin de la phase de rotation correspondante. Les grains germés peuvent être utilisés dans l'état relativement humide, dans lequel ils se trouvent à la fin des variantes du procédé proposé ci-dessus, mais lorsqu'on désire utiliser des grains germés relativement secs, destinés à être broyés et mélangés avec d'autres aliments pour animaux, le procédé selon l'invention comprend avantageusement, dans ses différentes variantes, une étape finale de séchage des grains germés dans la cuve. De plus, il est possible et avantageux, en cas de besoin, de compléter le procédé par une étape d'injection dans la cuve d'un liquide de désinfection de la cuve et/ou des grains, cette étape étant de préférence prévue avant le lavage. Enfin, le procédé peut également comprendre une étape d'adjonction, de préférence sous forme liquide, d'au moins un produit de conservation, tel que des bactéries lactiques, dans la charge de grains contenue dans la cuve.

Par ailleurs, la présente invention propose un dispositif industriel de germination de céréales et/ou légumineuse comprenant: une cuve cylindrique allongée, montée pour pouvoir tourner autour de son axe, des moyens pour entraîner cette cuve en rotation, des moyens pour introduire et répartir les grains à faire germer dans la cuve, des moyens d'arrosage des grains à traiter par un fluide approprié et sur toute la longueur de la cuve, et des moyens pour souffler de l'air dans la cuve.

Selon un aspect du dispositif conforme à la présente invention, les moyens d'introduction et de répartition des grains comprennent une trappe ménagée dans la paroi de la cuve en regard d'un ensemble à vis sans fin présentant des pas inversés dans les deux directions opposées à partir de la zone proche de ladite trappe. Selon un autre aspect de ce dispositif, les moyens d'arrosage établissent une liaison vers une arrivée d'eau directe et vers un réservoir contenant de l'eau et d'éventuels additifs, ce réservoir étant porté à une température choisie, supérieure à la température ambiante.

Dans un mode de réalisation de structure simple, les moyens d'entraînement en rotation de la cuve comprennent, d'une part, au moins une couronne dentée fixée sur la périphérie de la cuve et coopérant avec une chaîne entraînée par un group d'entraînement à moteur et, d'autre part, des galets servant de support et montés fous à rotation autour d'axes fixes sur le socle de la cuve. En outre, pour casser les éventuels agglomérats ou mottes de grains qui pourraient se former lors des rotations de la cuve cylindrique, le dispositif comprend de plus des lames d'émottage montées dans la cuve.

Afin de pouvoir procurer une charge de grains germés relativement sèche, le dispositif comprend de plus, en plus des moyens de ventilation, des moyens de séchage qui sont disposés dans un espace réservé, délimité dans la cuve par au moins une grille amovible. Enfin, pour faciliter la mise en oeuvre d'une phase d'injection dans la cuve d'un fluide désinfectant, lorsqu'une telle phase est souhaitée, le dispositif comprend de plus des moyens spécifiques d'injection de ce fluide désinfectant dans la cuve.

Ces objects, caractéristiques et avantages de l'invention seront exposés plus en détail dans la description suivante de modes de réalisation particuliers faite en relation avec les figures jointes parmi lesquelles :

les figures 1A et 1B, assemblées de la façon représentée en figure 1C, resprésentent une vue de côté en coupe d'un dispositif selon la présente invention ; et

les figures 2, 3 et 4 représentent des vues en bout et en coupe selon les plans 2-2 et 3-3 et 4-4 de la figure 1.

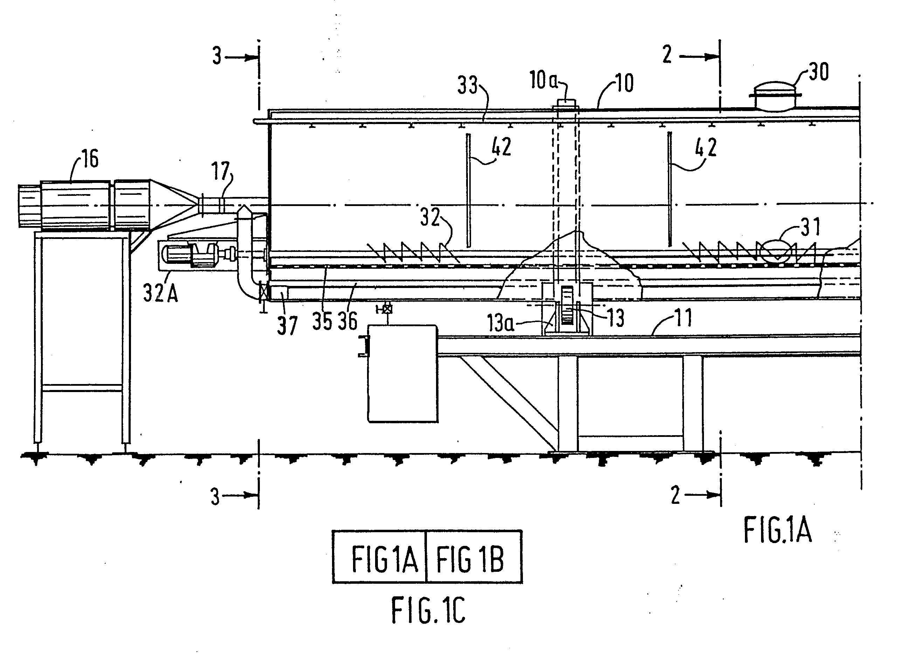

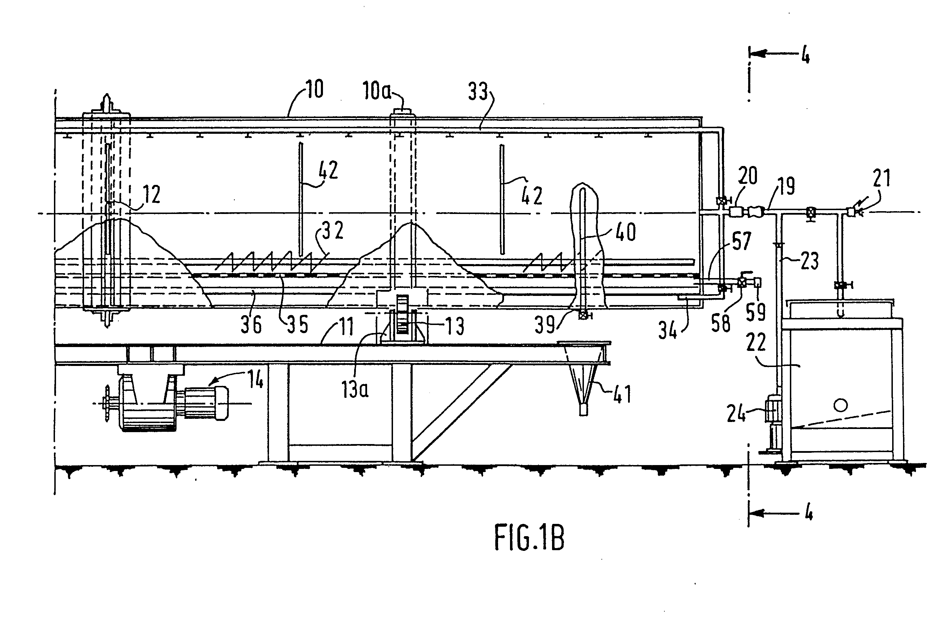

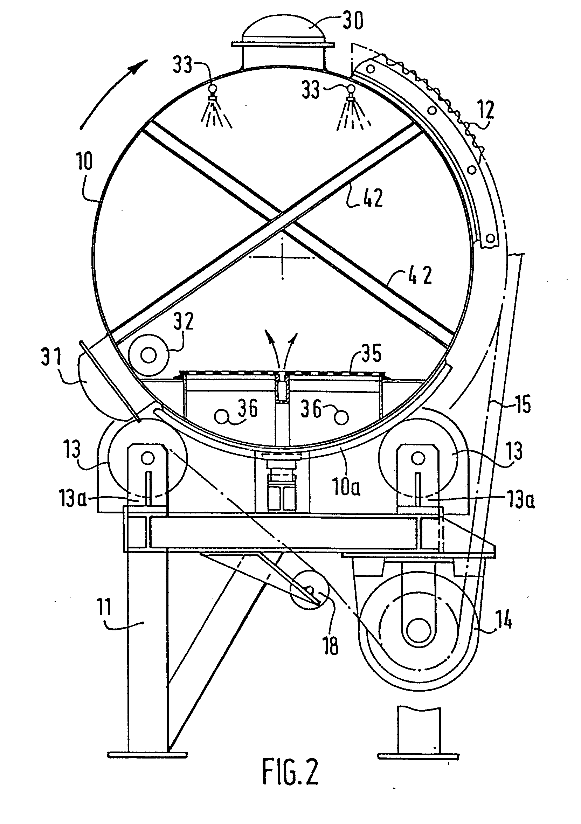

Les figures 1A et 1B, prises ensemble, de la façon illustrée en figure 1C, représentent schématiquement en vue de côté un appareil de germination de céréales selon la présente invention. Cet appareil comprend une cuve cylindrique 10 de longueur importante devant sa section, par exemple, dans un mode de réalisation pratique, pour un appareil permettant de traiter des lots de 12 tonnes de céréales, une longueur de 12 m pour un diamètre de l'ordre de 2 m. Cette cuve est montée sur un socle 11 de façon à pouvoir tourner sur elle-même autour de son axe longitudinal. Cette rotation de la cuve 10 peut être assurée par une couronne dentée ou crémaillère périphérique 12, solidaire de la cuve 10 et entraînée par un groupe d'entraînement moto-réducteur 14 à frein électrique, qui est monté sur un support fixé au socle 11, et par l'intermédiaire d'une chaîne d'entraînement 15 (voir figure 2) en prise avec la couronne dentée 12 et avec un pignon entraîné par l'arbre de sortie du groupe 14. D'autre part, la cuve 10 présente sur sa surface latérale externe deux chemins de roulement périphériques 10$_a$, par lesquels elle repose en des emplacements en regard, espacés axialement le long de la cuve 10 et symétriquement de part et d'autre du plan diamétral vertical de la cuve 10, sur des galets de roulement et de guidage 13, montés chacun fou en rotation autour d'un axe fixe, parallèle à celui de la cuve 10, et sur une chape 13$_a$ de fixation sur le socle 11 (voir également figures 2 à 4), pour que la cuve 10 puisse tourner avec un faible frottement.

Il est également prévu des moyens externes à la cuve :
- pour y insuffler de l'air chaud au moyen d'un groupe de ventilation à batterie chauffante 16, essentiellement constitué d'un ventilateur et de résistances électriques chauffantes, supporté par un chassis indépendant, et raccordé selon l'axe de la cuve 10 à l'aide d'un joint tournant 17,
- pour y envoyer divers fluides à l'aide d'une conduite d'arrivée de fluide 19, connectée selon l'axe de la cuve 10 par l'intermédiaire d'un joint tournant 20, diverses vannes permettant d'envoyer dans la conduite 19 ou bien directement de l'eau extérieure arrivant à un raccord à électrovanne 21, branché sur une conduite, ou bien un fluide particulier se trouvant dans un réservoir à résistances chauffants 22, monté sur un chassis indépendant, et à l'aide d'une deuxième conduite 23 et d'une pompe à électrovanne 24,
- pour assurer l'alimentation électrique de résistances chauffantes disposées à l'intérieur de la cuve 10 et d'un moteur d'entraînement de vis sans fin, qui seront décrits plus loin.

La cuve 10 comprend en outre, dans sa paroi latérale à génératrice sensiblement horizontale, une trappe d'aération 30 et un trappe de chargement et de déchargement ou de vidange 31. La trappe 31 est disposée au voisinage de la région centrale de la cuve, et celle-ci renferme en outre une vis sans fin 32 ou une paire de vis d'Archimède s'étendant sur toute la longueur de la cuve 10, en position excentrée dans cette dernière, et présentant des pas inversés à partir de la région de cette vis 32 correspondant à l'emplacement de la trappe de chargement et de déchargement 31 (voir figures 1A et 2). Cette vis 32 est entraînée par un groupe d'entraînement moto-réducteur à moteur réversible 32A, fixé contre la face externe d'une paroi d'extrémité axiale de la cuve 10, par exemple celle au travers de laquelle l'air chaud est insufflé axialement dans la cuve 10 par le joint tournant 17.

Ainsi, en choisissant convenablement le sens de rotation de cette vis 32, lors du chargement, le grain déversé dans la cuve 10 par la trappe 31 est réparti sur toute la longueur de la cuve 10 et, lors du déchargement par la trappe 31, ce grain germé est rassemblé vers la zone de déchargement. Le chargement et la répartition se feront avec une trappe 31 et une vis 32 en position haute, après une rotation appropriée de la cuve 10, tandis que le regroupement vers la trappe et le déchargement se feront avec la trappe 31 et la vis 32 en position basse après également une rotation appropriée de la cuve 10.

La conduite 19 d'alimentation en fluide est connectée, d'une part, à une ou plusieurs rampes d'arrosage ou de pulvérisation 33, en position supérieure en figures 1A et 1B, et, d'autre part, à une conduite diamètralement opposée d'introduction de liquide 34, en position inférieure sur ces figures. Une zone inférieure (en figures 1A et 1B) de la cuve 10 est munie d'une grille escamotable ou amovible 35 permettant de réserver une partie interne de la cuve dans laquelle le grain en cours de traitement ne pénètre pas. Dans la zone réservée par cette grille 35 est notamment disposée une ou plusieurs rampes de séchage 36, par exemple un système à résistances électriques chauffantes ou un système fournissant de l'air chaud sous pression, alimenté par un groupe moto-propulseur (non représenté). Dans cette zone réservée, il est également prévu de faire pénétrer éventuellement, par une canalisation 37, de l'air pulsé provenant du groupe de ventilation 16. La zone réservée permet également un meilleur séchage et une accumulation de fluide, sont l'excédent est évacué par un orifice de trop plein relié à une crépine 40 extérieure à la cuve 10, et dont l'extrémité libre porte une vanne de vidange 39, en partie basse de la cuve 10 dans la position des figures. Eventuellement, on prévoiera dans le socle 11 un entonnoir 41 dont la grande ouverture, dirigée vers le haut, est destinée à recevoir le fluide évacué par la vanne 39, et en particulier les eaux de rinçage et d'arrosage, comme précisé ci-dessous. L'ouverture ·de l'entonnoir 41 sera suffisamment grande pour recueillir le fluide évacué même quand un certain degré de rotation est imprimé à la cuve 10 par rapport à la position représentée sur les figures.

Les références 42 désignent des lames métalliques ou entretoises disposées dans la cuve 10, sensiblement dans des plans transversaux, et servant à casser des agglomérats ou mottes qui pourraient se former dans celle-ci. Cet émottage est réalisé lors de la mise en rotation de la cuve 10.

La paroi d'extrémité axiale de la cuve 10, du côté du réservoir ou bac 22, est traversée par un branchement 57 d'injection dans la cuve 10 d'un fluide de désinfection de la cuve elle-même et/ou des graines qu'elle contient, ce branchement 57 étant équipé d'un robinet à vanne de fermeture-ouverture 58 et, à son extrémité libre, d'un raccord 59 à fixation rapide d'une canalisation d'alimentation en gaz ou liquide désinfectant.

Les figures 2, 3 et 4 sont des vues selon les ligne 2-2, 3-3 et 4-4 de la figure 1, c'est-à-dire une coupe médiane, une vue de gauche et une vue de droite, respectivement, du dispositif des figures 1A et 1B. Ces vues ne seront décrites en détail, elles sont seulement destinées à permettre à l'homme de l'art de mieux comprendre certains aspects de l'invention qui ne ressortiraient pas nettement d'une analyse des figures 1A et 1B. On peut également y voir des détails supplémentaires qui n'apparaissent pas dans la figure 1. Dans ce vues, les mêmes références sont utilisées pour désigner de mêmes éléments qu'en figure 1.

Sur la figure 2, on notera plus particulièrement le fait que, dans le mode de réalisation représenté, il est prévu deux rampes d'arrosage 33. On y voit également mieux les lames d'émottage 42, montées par paire de lames qui se croisent dans des plants transversaux de la cuve 10, et la disposition relative de la vis sans fin 32 qui est excentrée et en regard de la trappe de chargement et de déchargement 31. De même, la grille 35, permettant de réserver une partie interne de la cuve 10 dans laquelle sont prévues deux rampes de séchage 36, est mieux représentée.

On voit aussi sur la figure 2, la crémaillère d'entraînement 12 associée au moteur d'entraînement 14 par une chaîne 15 soumise à l'action de moyens de tension à galet 18, supportés par le socle 11 et représentés à la partie inférieure de la figure 2. Les galets 13 de support de la cuve 10 sont également montrés en figure 2.

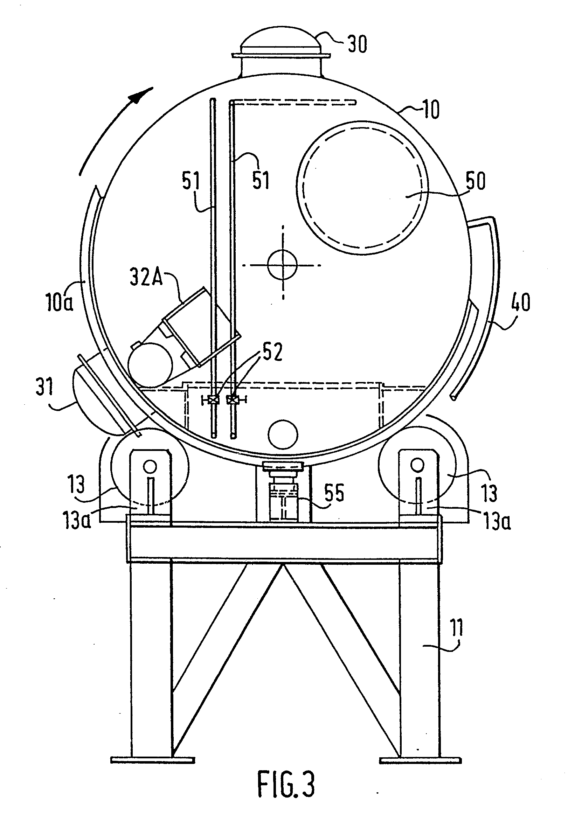

Sur la figure 3, qui est une vue en bout de gauche du dispositif de la figure 1, on revoit les éléments déjà représentés sur les figures 1 et 2 et, en outre, une trappe de visite 50 et des prolongements 51, munis de vannes 52, des rampes d'arrosage 33, servant à l'évacuation des fluides dans ces rampes. Dans la partie centrale de la figure, entre la cuve 10 et le socle 11, apparaît un système 55 qui figurait déjà en figure 2 et qui sert à bloquer la cuve dans une position donnée.

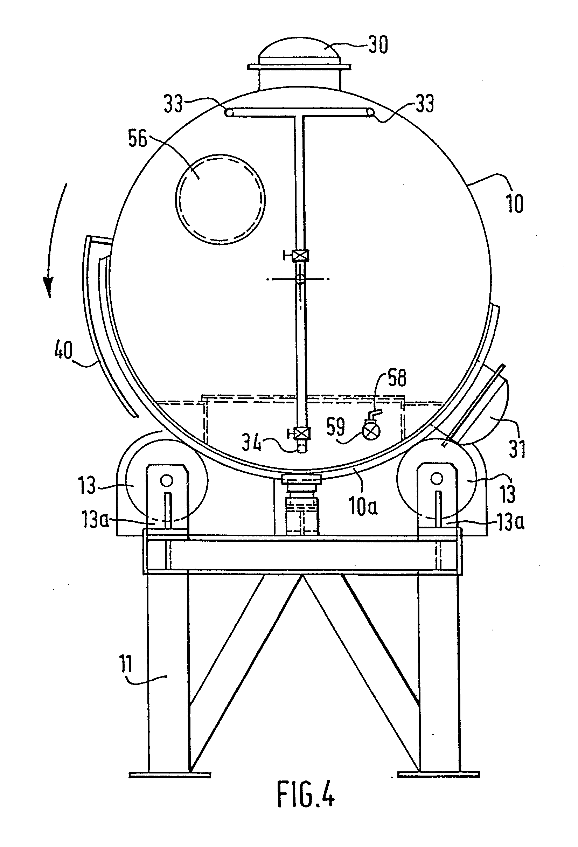

La figure 4 est une vue en bout de droite du dispositif des figures 1A et 1B. En plus des éléments déjà décrits, on y voit qu'une trappe d'aération 56 est ménagée dans la paroi d'extrémité correspondante de la cuve 10, et que la crépine d'évacuation du trop plein d'eau 40 est une crépine cintrée autour sensiblement d'un quart du périmètre de la cuve 10.

Pour obtenir la germination biologique de grains de céréales, le dispositif décrit et représenté est actionné de façon suivante.

Dans une première étape, la cuve 10 est approvisionnée avec une céréale telle que du blé, de l'orge, de l'avoine, du maïs, etc. par la trappe 31, tandis que la vis 32, située en face de la trappe, est entraînée en rotation. Bien entendu, lors de cette étape, la trappe 31 est amenée en position haute appropriée de la cuve 10. Ensuite, la trappe 31 peut être ramenée dans la position représentée dans les figures, et la vis 32 actionnée à nouveau pour améliorer encore la répartition du grain dans la cuve. La prévision de quelques rotation de la cuve aidera également à mieux répartir le grain.

Dans une deuxième étape, au cours de laquelle la cuve 10 est immobilisée en rotation dans la position représentée sur les figures, on procède on lavage des grains par immersion dans un liquide de lavage tel que de l'eau, introduit par la conduite 34 et/ou par arrosage à l'aide des rampes 33 et évacuation simultanée du liquide de lavage par la vanne de vidange 39 en partie basse de la cuve, dès que le niveau de trop-plein a été atteint. Ce lavage, destiné à évacuer les impuretés et les produits toxiques éventuels dans la cuve et/ou les grains, peut se faire en connectant la conduite 19 d'entrée dans la cuve 10 directement à l'embout d'arrivée d'eau 21. La troisième étape se décompose en plusieurs étapes partielles de pulvérisation d'eau chaude, sur la charge de céréales lavée contenue dans la cuve 10, à partir du fluide, tel que de l'eau chaude, contenu dans le réservoir 22, et à l'aide de la pompe 24, de la conduite 23, du joint tournant 20 et des rampes 33, puis de ventilation intérieure d'air chaud, à l'aide du groupe de ventilation 16 et du joint tournant 17, ainsi, éventuellement, que de la canalisation 37, et enfin de rotations successives de la cuve 10 entre et/ou au moins partiellement au cours de ces diverses étapes, pour permettre un mélange et une aération satisfaisante des grains. Dans une première variante du procédé, la troisième étape consiste en une répétition périodique d'un cycle de phases constitué d'une phase d'arrosage avec de l'eau à une température d'environ 30°, d'une phase de rotation d'au moins un tour sur elle-même de la cuve 10, d'une phase de ventilation à l'air chaud, et d'une nouvelle phase de rotation d'au moins un tour sur elle-même de la cuve 10. Ce cycle peut consister en une séquence de quatre phases successives, c'est-à-dire telle qu'une première phase de rotation ne commence qu'après la fin d'une phase d'arrosage, qu'une phase de ventilation à l'air chaud ne commence qu'après ou à la fin de la première phase de rotation, qu'une nouvelle phase de rotation ne commence qu'après ou à la fin de la phase de ventilation, et que la phase d'arrosage du cycle suivant ne commence qu'après ou à la fin de la seconde phase de rotation du cycle précédent. A la suite de l'étape de lavage, il est également possible que la cycle de l'étape de germination proprement dite commence par une phase de ventilation, suivie par une phase de rotation, puis une phase d'arrosage et enfin d'une nouvelle phase de rotation. On peut prévoir qu'en douze heures on réalisera six cycles complets d'arrosage, rotation, ventilation, rotation.

Dans une autre variante du procédé, la troisième étape consiste en une succession de cycles au cours de chacun desquels au moins une phase de ventilation d'air chaud dans la cuve et au moins une phase de rotation de la cuve se recouvrent au moins partiellement dans le temps et/ou au moins une phase d'arrosage des grains dans la cuve et au moins phase de rotation de la cuve se recouvrent au moins partiellement dans le temps. Dans ce cas, il est préférable que la phase de ventilation et/ou la phase d'arrosage se terminent avant la fin de la phase de rotation correspondante, et cela que les phases de ventilation et/ou d'arrosage aient commencé avant, en même temps ou après le début de la phase de rotation correspondante.

Dans toutes les variantes, que les phases d'arrosage et de ventilation soient plus ou moins simultanées ave les phases de rotation, ou que les différentes phases soient successives, l'a troisième étape ou étape de germination proprement dite du procédé peut être considérée comme une ventilation intérieure à l'air chaud, qui est entrecoupée de pulvérisations d'eau chaude avec ou sans conservateur, et de rotations successives et séquentielles de la cuve pour favoriser le mélange et l'aération du produit.

La vidange de l'eau apportée pour le lavage et les arrosages se fait en permanence pendant ces phases, car la vanne de vidange 39 reste toujours ouverte au cours de ces phases.

Dans des conditions normales, la germination est obtenue au bout de trois ou quatre jours, selon la céréale concernée, son état de maturation, et les conditions climatiques extérieures. Une fois la germination obtenue, et selon la qualité désirée du produit fini, on peut conserver le produit ainsi obtenu dans son état "humide", et l'extraire de la cuve 10 après avoir tourné la cuve de manière à disposer la trappe 31 et la vis 32 en position basse, et en faisant tourner la vis 32 dans le sens qui déplace le produit vers la partie centrale de la cuve, en regard de la trappe 31, pour nourrir par exemple des bovins adultes avec ce produit "humide", tandis que si l'on souhaite obtenir un produit "mi-sec", utilisable pour nourrir par exemple des veaux, après broyage et mélange avec d'autres aliments pour animaux, on procédera, dans une dernière étape avant l'extraction de la cuve 10, à un séchage plus ou moins important selon le produit souhaité, à l'aide des rampes de séchage 36 et éventuellement, de la canalisation 37 alimentée par le groupe de ventilation 16. Cette dernière étape peut être, éventuellement, précédée d'une étape de traitement par un produit de conservation, par exemple des bactéries lactiques. Ces bactéries pourront être disposées dans le réservoir 22 et répandues sous forme liquide sur le grain lors des derniers arrosages à l'eau chaude. Bien entendu, cette étape d'adjonction sous forme liquide de bactéries lactiques, pour favoriser la conservation du produit, peut également être prévu avant l'extraction d'un produit "humide", comme dernière étape d'un procédé ne comportant pas de séchage après germination. De plus, le procédé peut comporter une étape supplémentaire, consistant, avant le début du cycle de germination proprement dite de la charge de la cuve 10, à injecter dans cette dernière, par le brachement 57 et la vanne 58, un fluide gazeux ou liquide de désinfection de la cuve 10 seule, auquel cas l'injection de désinfectant est assurée avant le chargement de la cuve 10, ou de désinfection de la cuve et des grains, auquel cas l'injection de désinfectant est assurée après chargement de la cuve.

Dans une machine d'essai ainsi réalisée, qui permet de reconstituer artificiellement des conditions d'humidité et de chaleur favorisant une accélération du phénomène naturel de germination, ou a pu traiter 12 tonnes de céréales, ce qui a fourni, après germination, 20 tonnes de produit.

Le produit obtenu peut servir d'alimentation ou de complément d'alimentation du bétail (vache laitière, porc, veau, brebis etc...). Il peut également servir de conservateur d'ensilage par exemple pour des ensilages à base de betteraves ou de maïs.

Les diverses étapes de procédé décrites ci-dessus pourront faire l'objet d'une programmation pour actionner les diverses vannes d'introduction de fluide ou de soufflage d'air chaud et les commutateurs de mise en fonctionnement des moteurs des groupes 14 et 32A ainsi que des résistances électriques chauffantes des rampes de séchage, du groupe de ventilation et du réservoir d'eau chaude et de bactéries lactiques. L'appareil peut donc fonctionner de façonner totalement automatique, en étant piloté par un programmateur à micro-processeur. La présente invention n'est par limitée aux modes de réalisation qui ont été explicitement décrits, elle est au contraire susceptible de diverses variantes de réalisation. Par exemple, diverses étapes intermédiaires telles que des étapes de traitement spécifique lors du lavage initial pourront être ajoutées. De même, la réalisation pratique du dispositif de traitement pourra également subir diverses modifications du moment que l'on reste dans l'esprit et le domaine des revendications ci-après.

## Revendications

1. Procédé industriel de germination de céréales, et/ou légumineuses caractérisé en ce qu'il comprend les étapes suivantes:

a) le chargement et la répartition de grains à faire germer dans une cuve cylindrique allongée (10),

b) le lavage des grains par arrosage avec un liquide ou immersion dans un liquide déversé dans la cuve (10), et l'évacuation du liquide de lavage,

c) au moins une phase de ventilation d'air chaud dans la cuve (10), postérieurement au lavage,

d) au moins une phase d'arrosage des grains par pulvérisation d'un liquide chaud dans la cuve (10), postérieurement au lavage, et évacuation du liquide en excès, et

e) au moins une phase d'entraînement en rotation de la cuve autour de son axe, postérieurement au lavage.

2. Procédé selon la revendication 1, caractérisé en ce qu'il comprend, postérieurement au lavage, un cycle répétitif comportant une phase de ventilation, une phase d'arrosage et deux phases de rotation, dont l'une se déroule au moins partiellement entre la phase de ventilation et la phase d'arrosage, et l'autre entre l'une de ces deux phases du cycle considéré et l'autre de ces deux phases mais du cycle précédent ou suivant.

3. Procédé selon l'une des revendications 1 et 2, caractérisé en qu'au moins une phase de ventilation et au moins une phase de rotation et/ou au moins une phase d'arrosage et au moins une phase de rotation se recouvrent au moins partiellement dans le temps.

4. Procédé selon la revendication 3, caractérisé en ce que la fin d'une période de recouvrement de phases correspond à la fin d'une phase de ventilation ou d'arrosage avant la fin de la phase de rotation correspondante.

5. Procédé selon l'une des revendications 1 à 4, caractérisé en ce qu'il comprend de plus une étape finale de séchage des grains germés dans la cuve (10).

6. Procédé selon les revendications 1 à 5, caractérisé en ce qu'il comprend de plus, avant le lavage, une étape d'injection dans la cuve (10) d'un fluide de désinfection de la cuve et/ou des grains.

7. Procédé selon l'une des revendications 1 à 6, caractérisé en ce qu'il comprend de plus au moins une étape d'adjonction, de préférence sous forme liquide, d'au moins un produit de conservation, tel que des bactéries lactiques.

8. Dispositif industriel de germination de céréales, et/ou légumineuses ,caractérisé en ce qu'il comprend:

- une cuve cylindrique allongée (10) montée pour pouvoir tourner autour de son axe,
- des moyens (12, 15, 14) pour entraîner cette cuve en rotation,
- des moyens (31, 32) pour introduire et répartir les grains à germer dans la cuve (10),
- des moyens (33) d'arrosage des grains à traiter par un fluide approprié et sur toute la longueur de la cuve (10), et
- des moyens (16, 17) pour souffler de l'air chaud dans la cuve (10).

9. Dispositif industriel de germination de céréales selon la revendication 8, caractérisé en ce que les moyens d'introduction et de répartition des grains comprennent une trappe (31) disposée dans la paroi de la cuve (10) en regard d'un ensemble à vis sans fin (32) présentant des pas inversés dans les deux directions opposées à partir de la zone proche de ladite trappe (31).

10. Dispositif industriel de germination de céréales selon l'une des revendications 8 et 9, caractérisé en ce les moyens d'arrosage (33) sont reliés d'une part à une arrivée d'eau directe (21) et d'autre part à un réservoir (22) contenant de l'eau et d'éventuels additifs à une température choisie supérieure à la température ambiante.

11. Dispositif industriel de germination de céréales selon les revendications 8 à 10, caractérisé en ce que les moyens d'entraînement en rotation comprennent d'une part une couronne dentée (12) fixée sur la périphérie de la cuve cylindrique (10) et coopérant avec une chaîne (15) entraînée par un groupe d'entraînement (14) à moteur et d'autre part, des galets (13) servant de support et montés fous en rotation autour d'axes fixes sur le socle (11) de la cuve (10).

12. Dispositif industriel de germination de céréales selon l'une des revendications 8 à 11, caratérisé en ce qu'il comprend en outre des lames d'émottage (42) montées dans la cuve (10) pour casser lors des rotations de la cuve cylindrique les éventuels agglomérats de grains qui pourraient se former.

13. Dispositif industriel de germination de céréales selon l'une des revendication 8 à 12, caractérisé en ce qu'il comprend en outre des moyens (36) de séchage, en plus des moyens de ventilation, et qui sont disposés dans un espace réservé délimité dans la cuve (10) par au moins une grille amovible (35).

14. Dispositif industriel de germination de céréales selon l'une des revendications 8 à 13, caractérisé en ce qu'il comprend de plus des moyens (57, 58, 59) d'injection dans la cuve d'un fluide désinfectant.

FIG.1A

| FIG 1A | FIG 1B |
| --- | --- |

FIG.1C

FIG.1B

0256947

FIG.2

0256947

FIG.3

0256947

FIG.4

# RAPPORT DE RECHERCHE EUROPEENNE

Numero de la demande

EP 87 40 1864

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 162 805 (SCHMUTZ) <br> * Pages 24-32 * | 1 | A 01 C   1/02 <br> A 23 L   1/185 |
| A | | 5,7,10 | |
| | --- | | |
| Y | GB-A- 249 837 (TOPF) <br> * Page 2, ligne 21 - page 3, ligne 50; figures 1-7 * | 1 | |
| A | | 2,3,8, 11,13 | |
| | --- | | |
| A | US-A-1 950 418 (SCHREIER) <br> * Page 1, lignes 23-110; page 2, lignes 1-30 * | 1,2,3,5 | |
| | --- | | |
| A | GB-A-2 163 634 (COOPER) <br> * Page 1, ligne 89 - page 2, ligne 104; figures 1-3 * | 1,2,5,8 ,10,11 | |
| | --- | | |
| A | WO-A-8 505 535 (SEDGEMOOR) <br> * Pages 5-10; figures 1-5 * | 1-3,8- 11,13 | |
| | ----- | | |

DOMAINES TECHNIQUES RECHERCHES (Int. Cl.4)

A 01 C
A 23 K
A 23 L
C 12 C

Le présent rapport a été établi pour toutes les revendications

| Lieu de la recherche | Date d'achèvement de la recherche | Examinateur |
|---|---|---|
| LA HAYE | 17-11-1987 | VERMANDER R.H. |

EPO FORM 1503 03.82 (P0402)